# EUROPÄISCHE PATENTSCHRIFT

(11) **EP 2 150 731 B1**
(45) Veröffentlichungstag und Bekanntmachung des Hinweises auf die Patenterteilung: **01.04.2015**
(21) Anmeldenummer: 08736650.6
(22) Anmeldetag: 06.05.2008
(51) Int. Cl.: F16H 63/42, G01D 7/00

(54) **SYSTEM ZUM ÜBERWACHEN EINER ZUSTANDSANZEIGE**
SYSTEM FOR MONITORING A STATUS DISPLAY
SYSTEME DE CONTROLE D'UN AFFICHAGE D'ETAT

(30) Priorität: 15.05.2007 DE 102007022646
(43) Veröffentlichungstag der Anmeldung: 10.02.2010
(73) Patentinhaber: Continental Automotive GmbH, 30165 Hannover (DE); Bayerische Motoren Werke Aktiengesellschaft, 80809 München (DE)
(72) Erfinder: HENNIG, Thomas, 63930 Richelbach (DE); COGIEL, Janus, 80804 München (DE); BUCHHOLZ, Reiner, 64354 Reinheim (DE); FISCH, Walter, 94136 Thyrnau (DE); JILG, Herbert, 80807 München (DE); SCHOLZE, Michael, 60594 Frankfurt (DE); SKABROND, Klaus, 63743 Aschaffenburg-Obernau (DE); STUMPP, Markus, 85221 Dachau (DE)
(86) Internationale Anmeldenummer: PCT/EP2008/055514
(87) Internationale Veröffentlichungsnummer: WO 2008/138801

(56) Entgegenhaltungen:
- DE-A1-102005 023 818

## Beschreibung

Die Erfindung betrifft ein System zum Überwachen einer Zustandsanzeige und insbesondere ein System zum Überwachen einer Zustandsanzeige in einem Fahrzeug.

In sicherheitskritischen Systemen ist es von großer Bedeutung, dass ein Zustand des Systems richtig angezeigt wird. Ein falsch angezeigter Zustand kann einen Benutzer des Systems irreführen und diesen zu falschen Handlungen verleiten. Dies kann gegebenenfalls die Gesundheit oder das Leben von Menschen gefährden. Im allgemeinen ist es daher günstiger, die Zustandsanzeige abzuschalten, wenn der Zustand des Systems fehlerhaft angezeigt wird, um die gefährliche Irreführung des Benutzers zu verhindern. Zur Sicherstellung der richtigen Anzeige des Zustands des Systems sind sicherheitskritische Teile des Systems, zum Beispiel bezüglich der Steuerung und/oder Überwachung der Zustandsanzeige, doppelt vorgesehen. Dies ist jedoch aufwändig und teuer.

Die DE 10 2005 023 818 A1 offenbart eine Anzeigeeinheit für ein elektrifiziertes Schaltgetriebe in einem Fahrzeug. Die Anzeigeeinheit ist mit einer Getriebesteuereinheit über eine Datenleitung verbindbar, über die Botschaften austauschbar sind. Die Anzeigeeinheit weist einen Mikroprozessor, eine Treibereinrichtung und ein Anzeigemittel auf. Der Mikroprozessor werzet eine eine Ganginformation enthaltende Botschaft aus und führt die Ganginformation der Treibereinrichtung zum Ansteuern des Anzeigemittels zwecks Anzeige der Ganginformation zu. Ein Uberwachungsmittel ist vorgesehen, das die der Anzeigeeinheit in der Botschaft zugeführte Ganginformation und/oder die in der Anzeigeeinheit durchgeführte Verarbeitung der Botschaft überprüft und im Falle eines Fehlers einen sicheren Zustand des Anzeigemittels bewirkt.

Die Aufgabe der Erfindung ist, ein System zum Überwachen einer Zustandsanzeige zu schaffen, das zuverlässig und kostengünstig ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein System zum Überwachen einer Zustandsanzeige, das eine Anzeigesteuereinheit, eine Überwachungseinheit und eine Systemsteuereinheit umfasst. Die Anzeigesteuereinheit umfasst eine Recheneinheit oder ist als Recheneinheit ausgebildet. Die Anzeigesteuereinheit ist mit der Zustandsanzeige gekoppelt. Die Anzeigesteuereinheit ist ferner ausgebildet zum Ansteuern der Zustandsanzeige abhängig von einem anzuzeigenden Zustand, der der Anzeigesteuereinheit über eine erste Schnittstelle zuführbar ist. Die Überwachungseinheit ist als eine unabhängig von einem Betriebszustand der Anzeigesteuereinheit arbeitende Logikschaltung ausgebildet. Die Überwachungseinheit ist eingangsseitig mit mindestens einem Zustandsausgang der Zustandsanzeige gekoppelt. Die Überwachungseinheit ist ausgebildet zum Erfassen eines aktuell angezeigten Zustands der Zustandsanzeige und zum ausgangsseitigen Bereitstellen von diesem an einer zweiten Schnittstelle. Die Überwachungseinheit ist ferner mit der Zustandsanzeige gekoppelt und ist über eine dritte Schnittstelle mit der Anzeigesteuereinheit gekoppelt. Die Überwachungseinheit ist ferner ausgebildet zum Überwachen einer vorgegebenen Aktivität der Anzeigesteuereinheit und zum Abschalten der Zustandsanzeige bei Feststellen eines Fehlens oder eines Fehlers dieser vorgegebenen Aktivität. Die Systemsteuereinheit ist über die erste Schnittstelle mit der Anzeigesteuereinheit gekoppelt zum Senden des anzuzeigenden Zustands an die Anzeigesteuereinheit und ist über die zweite Schnittstelle mit der Überwachungseinheit gekoppelt zum Empfangen des durch die Überwachungseinheit bereitgestellten aktuell angezeigten Zustands. Die Systemsteuereinheit ist ferner ausgebildet zum Vergleichen des empfangenen aktuell angezeigten Zustands mit dem gesendeten anzuzeigenden Zustand und zum Ansteuern der Überwachungseinheit oder der Zustandsanzeige zum Abschalten der Zustandsanzeige bei Feststellen einer Abweichung.

Die Recheneinheit ist beispielsweise ein Mikrocontroller und die Logikschaltung ist beispielsweise als eine anwendungsspezifische integrierte Schaltung, kurz: ASIC, ausgebildet. Insbesondere fehlt der Logikschaltung die fehlerträchtige Funktionalität eines Mikrocontrollers oder einer anderen Recheneinheit in Bezug auf das Erfassen und Bereitstellen des aktuellen anzuzeigenden Zustands und in Bezug auf das Überwachen der vorgegebenen Aktivität der Anzeigesteuereinheit. Der Vorteil ist, dass eine solche Logikschaltung so ausgebildet ist, dass diese unabhängig von dem Betriebszustand der Recheneinheit arbeitet und typischen Fehlerquellen von Recheneinheiten nicht unterliegt. Solche Fehlerquellen sind insbesondere fehlerhafte Speicherzugriffe oder Programmfehler. Die statistische Wahrscheinlichkeit einer Fehlfunktion der Überwachungseinheit ist dadurch für die Logikschaltung gering im Vergleich zu einer entsprechenden Wahrscheinlichkeit für die Recheneinheit.

Das Abschalten der Zustandsanzeige kann sowohl durch die Systemsteuereinheit bei Feststellen eines Fehlers des aktuell angezeigten Zustands als auch durch die Überwachungseinheit veranlasst werden, falls die Anzeigesteuereinheit nicht richtig funktioniert und daher möglicherweise die Zustandsanzeige nicht entsprechend dem von der Systemsteuereinheit vorgegebenen anzuzeigenden Zustand ansteuern kann. Daraus resultiert eine hohe Zuverlässigkeit und Sicherheit vor falsch angezeigten Zuständen und somit vor potenziell irreführenden und dadurch gefährlichen Situationen. Ein weiterer Vorteil ist, dass die Überwachungseinheit zu geringen Kosten in hohen Stückzahlen herstellbar ist.

In einer vorteilhaften Ausgestaltung ist die Anzeigesteuereinheit ausgebildet zum Überwachen einer vorgegebenen Aktivität der Überwachungseinheit und zum Abschalten der Zustandsanzeige bei Feststellen eines Fehlens oder eines Fehlers dieser vorgegebenen Aktivität. Der Vorteil ist, dass sich die Überwachungseinheit und die Anzeigesteuereinheit gegenseitig überwachen. Dadurch ist sichergestellt, dass der aktuell angezeigte Zustand überprüft wird und dessen Richtigkeit oder Fehlerhaftigkeit zuverlässig und sicher festgestellt wird und dass die Zustandsanzeige andernfalls zur Sicherheit abgeschaltet wird. Dadurch weist das System eine besonders hohe Zuverlässigkeit und Sicherheit auf und ist somit auch für besonders sicherheitskritische Anwendungen geeignet.

In einer weiteren vorteilhaften Ausgestaltung weist die Anzeigesteuereinheit mindestens einen Erfassungseingang auf, der mit dem mindestens einen Zustandsausgang der Zustandsanzeige gekoppelt ist zum Erfassen des aktuell angezeigten Zustands der Zustandsanzeige. Die Anzeigesteuereinheit ist ausgebildet zum Vergleichen des erfassten aktuell angezeigten Zustands mit dem von der Systemsteuereinheit empfangenen anzuzeigenden Zustand und zum Ansteuern der Zustandsanzeige zum Abschalten der Zustandsanzeige bei Feststellen einer Abweichung. Der aktuell angezeigte Zustand kann somit sowohl durch die Systemsteuereinheit als auch durch die Anzeigesteuereinheit überprüft werden. Dadurch weist das System eine besonders hohe Zuverlässigkeit und Sicherheit durch die redundante Überprüfung auf und ist somit auch für besonders sicherheitskritische Anwendungen geeignet.

In einer weiteren vorteilhaften Ausgestaltung ist die Systemsteuereinheit eine Getriebesteuereinheit eines Fahrzeugs. Die Zustandsanzeige ist ausgebildet zum Anzeigen einer Getriebebetriebsart eines Getriebes des Fahrzeugs, das durch die Getriebesteuereinheit steuerbar ist. Der Vorteil ist, dass dadurch eine zuverlässige und sichere Anzeige der Getriebebetriebsart und insbesondere eines eingestellten Gangs des Getriebes gewährleistet ist. Dadurch ergibt sich eine hohe Sicherheit insbesondere vor falsch angezeigtem Rückwärtsgang bei eingelegtem Vorwärtsgang oder falsch angezeigtem Vorwärtsgang bei eingelegtem Rückwärtsgang. Unfälle können so vermieden werden.

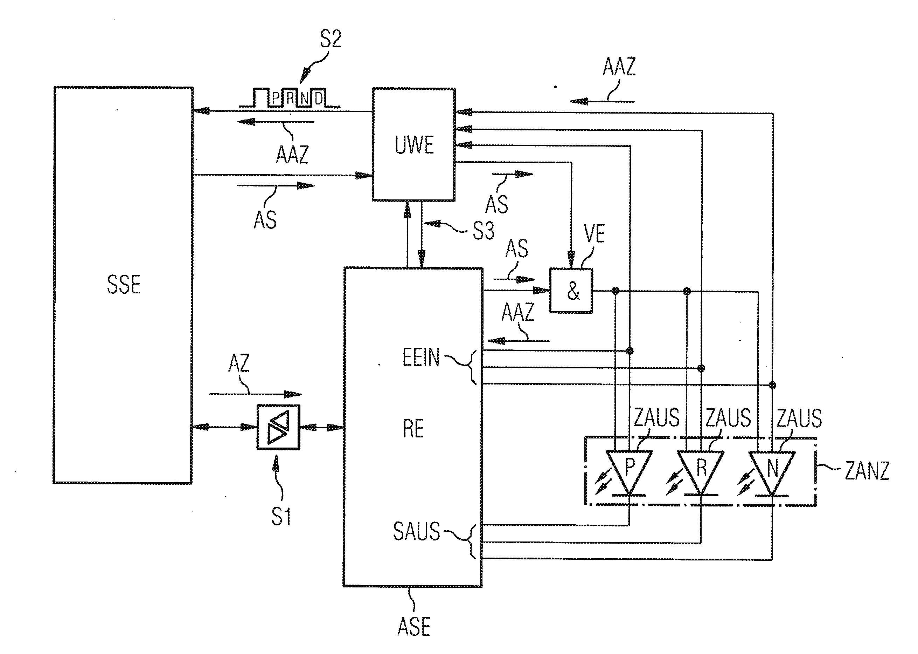

Ausführungsbeispiele der Erfindung sind im Folgenden anhand der schematischen Zeichnung erläutert. Die einzige Figur zeigt ein System zum Überwachen einer Zustandsanzeige ZANZ und insbesondere ein System zum Überwachen der Zustandsanzeige ZANZ in einem Fahrzeug, die ausgebildet ist, eine Getriebebetriebsart eines Getriebes des Fahrzeugs anzuzeigen. Dazu weist die Zustandsanzeige ZANZ beispielsweise Leuchtelemente auf, die zum Beispiel als lichtemittierende Dioden, oder kurz: LED, oder als Glühlampen oder andere Leuchtmittel ausgebildet sind. Ist das Getriebe des Fahrzeugs beispielsweise als ein Automatikgetriebe ausgebildet, dann ist beispielsweise für die Getriebebetriebsarten Parken, Neutral, Rückwärtsfahren und gegebenenfalls auch für Vorwärtsfahren jeweils ein Leuchtelement in der Zustandsanzeige ZANZ vorgesehen. Beispielsweise wird die Zustandsanzeige ZANZ durch eine Anzeigesteuereinheit ASE derart angesteuert, dass in der jeweiligen Getriebebetriebsart das zugehörige Leuchtelement bestromt wird, das dadurch leuchtet.

Für die Sicherheit im Straßenverkehr ist es jedoch von großer Bedeutung, dass ein aktuell angezeigter Zustand AAZ des Getriebes bezüglich der Getriebebetriebsart mit der in dem Getriebe tatsächlich eingestellten Getriebebetriebsart übereinstimmt. Andernfalls können beispielsweise schwere Unfälle dadurch verursacht werden, dass fälschlicherweise Vorwärtsfahren angezeigt wird, tatsächlich jedoch Rückwärtsfahren eingestellt ist, oder umgekehrt.

Für das Überwachen der Zustandsanzeige ZANZ ist jedem Leuchtelement ein Sensor zugeordnet, dessen jeweiliges Ausgangssignal an einem jeweiligen Zustandsausgang ZAUS der Zustandsanzeige ZANZ bereitstellbar ist. Beispielsweise ist ein solcher Sensor als ein Phototransistor ausgebildet und ist so an dem zugehörigen Leuchtelement angeordnet, dass dessen Helligkeit erfassbar ist. Das Ausgangssignal des jeweiligen Sensors ist abhängig von der erfassten Helligkeit des jeweiligen Leuchtelements und repräsentiert daher einen Leuchtzustand des jeweiligen Leuchtelements, das heißt ob das jeweilige Leuchtelement leuchtet oder nicht. Bevorzugt ist der jeweilige Sensor in dem jeweils zugehörigen Leuchtelement integriert. Die Ausgangssignale der Sensoren, die an den Zustandsausgängen ZAUS der Zustandsanzeige ZANZ bereitgestellt werden, repräsentieren den aktuell angezeigten Zustand AAZ.

Die Anzeigesteuereinheit ASE weist eine Recheneinheit RE auf oder ist als Recheneinheit RE ausgebildet. Die Anzeigesteuereinheit ASE weist jeweils einen Erfasssungseingang EEIN für jeden Zustandsausgang ZAUS der Zustandsanzeige ZANZ auf. Der jeweilige Zustandsausgang ZAUS ist mit dem jeweils zugehörigen Erfassungseingang EEIN gekoppelt zum Zuführen des Ausgangssignals des jeweiligen Sensors. Die Anzeigesteuereinheit ASE weist ferner jeweils einen Steuerausgang SAUS auf für jedes Leuchtelement der Zustandsanzeige ZANZ. Die Leuchtelemente sind mit dem jeweils zugehörigen Steuerausgang SAUS gekoppelt. Die Anzeigesteuereinheit ASE ist ausgebildet, die Zustandsanzeige ZANZ und insbesondere die Leuchtelemente anzusteuern abhängig von einem anzuzeigenden Zustand AZ, der der Anzeigesteuereinheit ASE über eine erste Schnittstelle S1 durch eine Systemsteuereinheit SSE zuführbar ist. Die Anzeigesteuereinheit ASE ist ferner ausgebildet zum Vergleichen des über den Erfassungseingang EEIN erfassten aktuell angezeigten Zustands AAZ und des von der Systemsteuereinheit SSE zugeführten anzuzeigenden Zustands AZ. Ferner ist die Anzeigesteuereinheit ASE ausgebildet, bei Feststellen einer Abweichung ein Abschaltsignal AS zu erzeugen. Die Zustandsanzeige ZANZ ist ausgebildet, abhängig von dem Abschaltsignal AS abgeschaltet zu werden.

Beispielsweise ist eine Verknüpfungseinheit VE vorgesehen, der das Abschaltsignal AS eingangsseitig zuführbar ist und die ausgangsseitig mit der Zustandsanzeige ZANZ gekoppelt ist. Die Verknüpfungseinheit VE ist beispielsweise so ausgebildet, dass diese der Zustandsanzeige ZANZ ein Betriebspotential für den Betrieb der Leuchtelemente bereitstellt, wenn das Abschaltsignal AS eingangsseitig nicht anliegt, und das Betriebspotential nicht bereitstellt, wenn das Abschaltsignal AS eingangsseitig anliegt.

Die Leuchtelemente sind beispielsweise als lichtemittierende Dioden ausgebildet und sind mit ihrem jeweiligen Anodenanschluss mit einem Ausgang der Verknüpfungseinheit VE gekoppelt und sind mit ihrem jeweiligen Kathodenanschluss mit dem jeweils zugehörigen Steuerausgang SAUS der Anzeigesteuereinheit ASE gekoppelt. Die Verknüpfungseinheit VE ist beispielsweise als ein Und-Gatter ausgebildet. Das eingangsseitig dem Und-Gatter zugeführte Abschaltsignal AS ist beispielsweise durch einen Nullpegel repräsentiert, ein Einspegel bedeutet im Gegensatz dazu, dass das Abschaltsignal AS nicht vorliegt. Bei Vorliegen des Abschaltsignals AS weist auch ein Ausgang des Und-Gatters den Nullpegel auf. Die Anzeigesteuereinheit ASE ist beispielsweise ausgebildet, das jeweils gewünschte Leuchtelement zu bestromen durch Ausgeben des Nullpegels an dem zugehörigen Steuerausgang SAUS und das Bestromen zu unterbinden durch Ausgeben des Einspegels an dem zugehörigen Steuerausgang SAUS. Ausreichend bestromt wird das jeweilige Leuchtelement jedoch nur dann, wenn der Ausgang der Verknüpfungseinheit VE den Einspegel aufweist und der zugehörige Steuerausgang SAUS den Nullpegel aufweist. Durch Herbeiführen des Nullpegels an dem Ausgang der Verknüpfungseinheit VE durch das Abschaltsignal AS werden somit alle Leuchtelemente der Zustandsanzeige ZANZ abgeschaltet und somit am Leuchten gehindert. Das Ansteuern und/oder Abschalten der Zustandsanzeige ZANZ kann jedoch auch anders ausgebildet sein.

Die Systemsteuereinheit SSE ist beispielsweise als eine Getriebesteuereinheit ausgebildet zum Steuern des Getriebes des Fahrzeugs. Die Systemsteuereinheit SSE ist ausgebildet zum Senden des jeweils aktuellen und somit anzuzeigenden Zustands AZ des Getriebes in Bezug auf die Getriebebetriebsart an die Anzeigesteuereinheit ASE über die erste Schnittstelle S1. Die erste Schnittstelle S1 ist beispielsweise als ein Controller Area Network, oder kurz: CAN, ausgebildet. Die erste Schnittstelle S1 kann jedoch auch anders ausgebildet sein.

Das System umfasst ferner eine Überwachungseinheit UWE, die über eine zweite Schnittstelle S2 mit der Systemsteuereinheit SSE gekoppelt ist und die über eine dritte Schnittstelle S3 mit der Anzeigesteuereinheit ASE gekoppelt ist. Ferner ist die Überwachungseinheit UWE eingangsseitig gekoppelt mit den Zustandsausgängen ZAUS der Zustandsanzeige ZANZ und ist ausgangsseitig über die Verknüpfungseinheit VE mit der Zustandsanzeige ZANZ gekoppelt zum Abschalten der Zustandsanzeige ZANZ mittels Abschaltsignal AS. Die Überwachungseinheit UWE ist ausgebildet, die von den Sensoren über die Zustandsausgänge ZAUS der Zustandsanzeige ZANZ bereitgestellten Ausgangssignale, die den aktuell angezeigten Zustand AAZ repräsentieren, zu erfassen und über die zweite Schnittstelle S2 der Systemsteuereinheit SSE zuzuführen. Bevorzugt weist die zweite Schnittstelle S2 weniger Leitungen auf als eingangsseitig der Überwachungseinheit UWE erforderlich sind, um den aktuell angezeigten Zustand AAZ von den Zustandsausgängen ZAUS der Zustandsanzeige ZANZ zu der Überwachungseinheit UWE zu führen. Bevorzugt ist die zweite Schnittstelle S2 bezüglich des Zuführens des aktuell angezeigten Zustands AAZ als eine Eindraht- oder Zweidrahtschnittstelle ausgebildet. Der aktuell angezeigte Zustand AAZ wird über diese vorzugsweise kodiert übertragen, zum Beispiel digital kodiert. Die zweite Schnittstelle S2 kann jedoch auch anders ausgebildet sein.

Die Systemsteuereinheit SSE ist ausgebildet zum Empfangen des aktuell angezeigten Zustands AAZ über die zweite Schnittstelle S2 und zum Vergleichen des empfangenen aktuell angezeigten Zustands AAZ mit dem über die erste Schnittstelle S1 gesendeten und anzuzeigenden Zustand AZ. Die Systemsteuereinheit SSE ist ferner ausgebildet zum Erzeugen des Abschaltsignals AS bei Feststellen einer Abweichung zwischen diesen Zuständen. Das Abschaltsignal AS ist der Überwachungseinheit UWE über die zweite Schnittstelle S2, zum Beispiel über eine separate Leitung, zuführbar. Die Überwachungseinheit UWE ist ausgebildet, das ihr zugeführte Abschaltsignal AS der Zustandsanzeige ZANZ über die Verknüpfungseinheit VE zuzuführen. Alternativ kann das System auch so ausgebildet sein, dass das durch die Systemsteuereinheit SSE erzeugte Abschaltsignal AS auch unmittelbar der Zustandsanzeige ZANZ über die Verknüpfungseinheit VE zuführbar ist.

Die Überwachungseinheit UWE ist ausgebildet zum Überwachen einer vorgegebenen Aktivität der Anzeigesteuereinheit ASE und zum Erzeugen des Abschaltsignals AS bei Feststellen eines Fehlens oder eines Fehlers dieser vorgegebenen Aktivität. Die vorgegebene Aktivität besteht beispielsweise darin, dass sich die Anzeigesteuereinheit ASE in einem vorgegebenen Zeitintervall über die dritte Schnittstelle S3 bei der Überwachungseinheit UWE auf eine vorgegebene Art und Weise meldet. Bei Ausbleiben der Meldung über eine vorgegebene Zeitdauer oder bei fehlerhafter Meldung wird das Abschaltsignal AS erzeugt und der Zustandsanzeige ZANZ über die Verknüpfungseinheit VE zugeführt zum Abschalten der Zustandsanzeige ZANZ. Eine solche Überwachungsfunktion kann auch als Watchdog-Funktion bezeichnet werden. Die vorgegebene Aktivität kann jedoch auch anders ausgebildet sein.

Entsprechend kann auch die Anzeigesteuereinheit ASE und insbesondere deren Recheneinheit RE ausgebildet sein zum Überwachen einer vorgegebenen Aktivität der Überwachungseinheit UWE und zum Erzeugen des Abschaltsignals AS bei Feststellen eines Fehlens oder eines Fehlers dieser vorgegebenen Aktivität. Bei Ausbleiben der vorgegebenen Aktivität über die vorgegebene Zeitdauer oder bei fehlerhafter Aktivität wird das Abschaltsignal AS erzeugt und der Zustandsanzeige ZANZ über die Verknüpfungseinheit VE zugeführt zum Abschalten der Zustandsanzeige ZANZ.

Es ist wesentlich, dass das Erfassen des aktuell angezeigten Zustands AAZ und dessen Bereitstellen an der zweiten Schnittstelle S2 und die Überwachungsfunktionalität gemeinsam in der Überwachungseinheit UWE ausgebildet sind. Die Wahrscheinlichkeit ist dann groß, dass auch die Überwachungsfunktionalität der Überwachungseinheit UWE gestört ist, wenn das Erfassen und Bereitstellen des aktuell angezeigten Zustands AAZ gestört ist und umgekehrt. Auf diese Weise kann die Anzeigesteuereinheit ASE und insbesondere deren Recheneinheit RE mit hoher Zuverlässigkeit die Störung oder den Ausfall des Erfassens und Bereitstellens des aktuell angezeigten Zustands AAZ erkennen und die Zustandsanzeige ZANZ durch Erzeugen des Abschaltsignals AS abschalten.

Die Überwachungseinheit UWE ist als eine Logikschaltung ausgebildet, insbesondere in Form einer anwendungsspezifischen integrierten Schaltung, kurz: ASIC. Die Logikschaltung weist dabei nicht die fehlerträchtige Funktionalität einer weiteren Recheneinheit, zum Beispiel eines weiteren Mikrocontrollers, in Bezug auf das Erfassen des aktuell angezeigten Zustands AAZ und in Bezug auf das Überwachen der vorgegebenen Aktivität der Anzeigesteuereinheit ASE auf. Die Überwachungseinheit UWE ist unabhängig von der Anzeigesteuereinheit ASE und insbesondere von der Recheneinheit RE und unabhängig von der Systemsteuereinheit SSE betreibbar. Insbesondere ist die Überwachungseinheit UWE unabhängig betreibbar bezüglich eines Betriebszustands der Recheneinheit RE. Die Logikschaltung ist im Vergleich zu dem Mikrocontroller besonders zuverlässig und kostengünstig. Ferner muss die Logikschaltung für ihren Betrieb keinen Selbsttest durchführen und steht daher nach dem Start des Systems ohne wesentliche Verzögerung zur Verfügung. Ferner kann die Logikschaltung kleiner ausgebildet werden im Vergleich zu dem Mikrocontroller und benötigt dadurch weniger Platz.

Bevorzugt ist das System ausgebildet zum Durchführen einer Eigendiagnose. Die Eigendiagnose wird insbesondere bei einem Start des Systems durchgeführt. Die Eigendiagnose kann beispielsweise sehr einfach durchgeführt werden durch Ein- und Wiederausschalten des jeweiligen Leuchtelements in der Zustandsanzeige ZANZ und durch den jeweiligen Vergleich des jeweils aktuell angezeigten Zustands AAZ und des anzuzeigenden Zustands AZ. Der Ausfall eines der Leuchtelemente oder mehrerer Leuchtelemente oder sonstige Störungen bezüglich der Anzeige des jeweils anzuzeigenden Zustands AZ können so sehr einfach erkannt werden. Ferner kann auch vorgesehen sein, im Rahmen der Eigendiagnose einen Zustand abweichend von dem anzuzeigenden Zustand AZ anzuzeigen und auf diese Weise die Funktionsfähigkeit der Systemsteuereinheit SSE, der Überwachungseinheit UWE und der Anzeigesteuereinheit ASE bezüglich der Erkennung dieser fehlerhaften Anzeige zu überprüfen, das heißt zu überprüfen, ob das Abschaltsignal AS erzeugt wird und die Zustandsanzeige ZANZ dadurch abgeschaltet wird. Die Eigendiagnose kann im Allgemeinen in nur wenigen Millisekunden oder wenigen zehn Millisekunden durchgeführt werden. Die Eigendiagnose des Systems wird vorzugsweise durch die Systemsteuereinheit SSE gesteuert.

## Patentansprüche

1. System zum Überwachen einer Zustandsanzeige (ZANZ), das umfasst
- eine Anzeigesteuereinheit (ASE), die eine Recheneinheit (RE) umfasst oder als Recheneinheit (RE) ausgebildet ist und die mit der Zustandsanzeige (ZANZ) gekoppelt ist und die ausgebildet ist zum Ansteuern der Zustandsanzeige (ZANZ) abhängig von einem anzuzeigenden Zustand (AZ), der der Anzeigesteuereinheit (ASE) über eine erste Schnittstelle (S1) zuführbar ist,
- eine Überwachungseinheit (UWE), die als eine unabhängig von einem Betriebszustand der Anzeigesteuereinheit (ASE) arbeitende Logikschaltung ausgebildet ist und die eingangsseitig mit mindestens einem Zustandsausgang (ZAUS) der Zustandsanzeige (ZANZ) gekoppelt ist und die ausgebildet ist zum Erfassen eines aktuell angezeigten Zustands (AAZ) der Zustandsanzeige (ZANZ) und zum ausgangsseitigen Bereitstellen von diesem an einer zweiten Schnittstelle (S2) und die mit der Zustandsanzeige (ZANZ) gekoppelt ist und über eine dritte Schnittstelle (S3) mit der Anzeigesteuereinheit (ASE) gekoppelt ist und ausgebildet ist zum Überwachen einer vorgegebenen Aktivität der Anzeigesteuereinheit (ASE) und zum Abschalten der Zustandsanzeige (ZANZ) bei Feststellen eines Fehlens oder eines Fehlers dieser vorgegebenen Aktivität,
- eine Systemsteuereinheit (SSE), die über die erste Schnittstelle (S1) mit der Anzeigesteuereinheit (A-SE) gekoppelt ist zum Senden des anzuzeigenden Zustands (AZ) an die Anzeigesteuereinheit (ASE) und die über die zweite Schnittstelle (S2) mit der Überwachungseinheit (UWE) gekoppelt ist zum Empfangen des durch die Überwachungseinheit bereitgestellten aktuell angezeigten Zustand (AAZ) und die ausgebildet ist zum Vergleichen des empfangenen aktuell angezeigten Zustands (AAZ) mit dem gesendeten anzuzeigenden Zustand (AZ) und zum Ansteuern der Überwachungseinheit (UWE) oder der Zustandsanzeige (ZANZ) zum Abschalten der Zustandsanzeige (ZANZ) bei Feststellen einer Abweichung.

2. System nach Anspruch 1, bei dem die Anzeigesteuereinheit (ASE) ausgebildet ist zum Überwachen einer vorgegebenen Aktivität der Überwachungseinheit (UWE) und zum Abschalten der Zustandsanzeige (ZANZ) bei Feststellen eines Fehlens oder eines Fehlers dieser vorgegebenen Aktivität.

3. System nach einem der vorstehenden Ansprüche, bei dem die Anzeigesteuereinheit (ASE) mindestens einen Erfassungseingang (EEIN) aufweist, der mit dem mindestens einen Zustandsausgang (ZAUS) der Zustandsanzeige (ZANZ) gekoppelt ist zum Erfassen des aktuell angezeigten Zustands (AAZ) der Zustandsanzeige (ZANZ), und die Anzeigesteuereinheit (ASE) ausgebildet ist zum Vergleichen des erfassten aktuell angezeigten Zustands (AAZ) mit dem von der Systemsteuereinheit (SSE) empfangenen anzuzeigenden Zustand (AZ) und zum Ansteuern der Zustandsanzeige (ZANZ) zum Abschalten der Zustandsanzeige (ZANZ) bei Feststellen einer Abweichung.

4. System nach einem der vorstehenden Ansprüche, bei dem die Systemsteuereinheit (SSE) eine Getriebesteuereinheit eines Fahrzeugs ist und die Zustandsanzeige (ZANZ) ausgebildet ist zum Anzeigen einer Getriebebetriebsart eines Getriebes des Fahrzeugs, das durch die Getriebesteuereinheit steuerbar ist.

## Claims

1. System for monitoring a status display (ZANZ), which system comprises
- a display control unit (ASE) that comprises a computation unit (RE) or is in the form of a computation unit (RE) and that is coupled to the status display (ZANZ) and that is designed to actuate the status display (ZANZ) on the basis of a status (AZ) to be displayed that can be supplied to the display control unit (ASE) via a first interface (S1),
- a monitoring unit (UWE) that is in the form of a logic circuit operating independently of an operating state of the display control unit (ASE) and that has its input side coupled to at least one status output (ZAUS) of the status display (ZANZ) and that is designed to sense a currently indicated status (AAZ) of the status display (ZANZ) and to provide the latter on the output side on a second interface (S2) and that is coupled to the status display (ZANZ) and is coupled via a third interface (S3) to the display control unit (ASE) and is designed to monitor a prescribed activity of the display control unit (ASE) and to shut down the status display (ZANZ) if said prescribed activity is found to be absent or to have an error,
- a system control unit (SSE) that is coupled via the first interface (S1) to the display control unit (ASE) for the purpose of sending the status (AZ) to be indicated to the display control unit (ASE) and that is coupled via the second interface (S2) to the monitoring unit (UWE) for the purpose of receiving the currently indicated status (AAZ) provided by the monitoring unit and that is designed to compare the received currently indicated status (AAZ) with the sent status (AZ) to be indicated and to actuate the monitoring unit (UWE) or the status display (ZANZ) to shut down the status display (ZANZ) if a discrepancy is found.

2. System according to Claim 1, in which the display control unit (ASE) is designed to monitor a prescribed activity of the monitoring unit (UWE) and to shut down the status display (ZANZ) if said prescribed activity is found to be absent or to have an error.

3. System according to either of the preceding claims, in which the display control unit (ASE) has at least one sensing input (EEIN) that is coupled to the at least one status output (ZAUS) of the status display (ZANZ) for the purpose of sensing the currently indicated status (AAZ) of the status display (ZANZ), and the display control unit (ASE) is designed to compare the sensed currently indicated status (AAZ) with the status (AZ) to be indicated that is received from the system control unit (SSE) and to actuate the status display (ZANZ) to shut down the status display (ZANZ) if a discrepancy is found.

4. System according to one of the preceding claims, in which the system control unit (SSE) is a transmission control unit in a vehicle and the status display (ZANZ) is designed to display a transmission mode of operation for a transmission in the vehicle that can be controlled by the transmission control unit.

## Revendications

1. Système de contrôle d'un affichage (ZANZ) d'état, qui comprend
- une unité (ASE) de commande d'affichage, qui comprend une unité (RE) informatique ou qui est constituée en unité (RE) informatique et qui est reliée à l'affichage (ZANZ) d'état et qui est constituée, pour commander l'affichage (ZANZ) d'état, en fonction d'un état (AZ) à afficher, qui peut être apporté à l'unité (ASE) de commande d'affichage, par une première interface (S1),
- une unité (UWE) de contrôle, qui est constituée en circuit logique fonctionnant indépendamment d'un état de fonctionnement de l'unité (ASE) de commande d'affichage et qui est reliée du côté de l'entrée à au moins une sortie (ZAUS) d'état de l'affichage (ZANZ) d'état et qui est constituée pour la détection d'un état (AAZ) affiché présentement de l'affichage (ZANZ) d'état et pour la mise à disposition du côté de la sortie de cet état sur une deuxième interface (S2) et qui est reliée à l'affichage (ZANZ) d'état et qui est reliée par une troisième interface (S3) à l'unité (ASE) de commande d'affichage et qui est constituée pour le contrôle d'une activité donnée à l'avance de l'unité (ASE) de commande d'affichage et pour l'arrêt de l'affichage (ZANZ) d'état, si l'on constate une erreur ou une défaillance de cette activité donnée à l'avance,
- une unité (SSE) de commande de système, qui est reliée par la première interface (S1) à l'unité (ASE) de commande d'affichage, pour l'envoi de l'état (AZ) à afficher à l'unité (ASE) de commande d'affichage, et qui est reliée par la deuxième interface (S2) à l'unité (UWE) de contrôle pour la réception de l'état (AAZ) affiché présentement et mis à disposition par l'unité de contrôle, et qui est constituée pour la comparaison de l'état (AAZ) affiché présentement et reçu à l'état (AZ) à afficher qui est envoyé et pour la commande de l'unité (UWE) de contrôle ou de l'affichage (ZANZ) d'état, afin d'arrêter l'affichage (ZANZ) d'état si un écart est constaté.

2. Système suivant la revendication 1, dans lequel l'unité (ASE) de commande d'affichage est constituée pour le contrôle d'une activité donnée à l'avance de l'unité (UWE) de contrôle et pour l'arrêt de l'affichage (ZANZ) d'état, si une erreur est constatée ou si l'on constate une défaillance de cette activité donnée à l'avance.

3. Système suivant l'une des revendications précédentes, dans lequel l'unité (ASE) de commande d'affichage a au moins une entrée (EEIN) de détection, qui est reliée à la au moins une sortie (ZAUS) d'état de l'affichage (ZANZ) d'état, pour la détection de l'état (AAZ) affiché présentement de l'affichage (ZANZ) d'état, et l'unité (ASE) de commande d'affichage est constituée pour la comparaison de l'état (AAZ) affiché présentement et détecté à l'état (AZ) à afficher et reçu par l'unité (SSE) de commande du système et pour la commande de l'affichage (ZANZ) d'état, afin d'arrêter l'affichage (ZANZ) d'état si un écart est constaté.

4. Système suivant l'une des revendications précédentes, dans lequel l'unité (SSE) de commande de système est une unité de commande de la transmission d'un véhicule et l'affichage (ZANZ) d'état est constitué pour afficher un type de fonctionnement d'une transmission du véhicule, qui peut être commandée par l'unité de commande de la transmission.
